Europäisches Patentamt

European Patent Office

Office européen des brevets

(11) Veröffentlichungsnummer: **0 029 184**
B1

## (12) EUROPÄISCHE PATENTSCHRIFT

(45) Veröffentlichungstag der Patentschrift:
28.03.84

(21) Anmeldenummer: 80106856.0

(22) Anmeldetag: 06.11.80

(51) Int. Cl.³: **F 16 K 1/12**

### (54) Druckmittelgesteuertes Ventil.

(30) Priorität: 17.11.79 DE 2946511

(43) Veröffentlichungstag der Anmeldung:
27.05.81 Patentblatt 81/21

(45) Bekanntmachung des Hinweises auf die Patenterteilung:
28.03.84 Patentblatt 84/13

(84) Benannte Vertragsstaaten:
AT BE CH DE FR GB IT LI LU NL SE

(56) Entgegenhaltungen:
AU - B - 413 317
DE - A - 1 775 332
DE - A - 2 401 970
DE - A - 2 553 163
DE - A - 2 730 520
FR - A - 2 092 293
FR - A - 2 357 796
FR - A - 2 405 414
GB - A - 1 105 353

(73) Patentinhaber: INTERATOM Internationale
Atomreaktorbau GmbH, Friedrich-Ebert-Strasse,
D-5060 Bergisch Gladbach 1 (DE)

(72) Erfinder: Jansing, Walter, Dipl.-Ing., Diakonissenweg 26,
D-5060 Bergisch-Gladbach 1 (DE)

(74) Vertreter: Mehl, Ernst, Dipl.-Ing., Postfach 22 01 76,
D-8000 München 22 (DE)

## Druckmittelgesteuertes Ventil

Die vorliegende Erfindung betrifft ein Ventil der im Oberbegriff des ersten Anspruchs genannten Art. Es ist insbesondere für die Absperrung von Rohrleitungen grossen Durchmessers (z.B. von etwa 1000 mm) im Kernenergieanlagen geeignet, die mit flüssigem Metall, z.B. Natrium oder mit Gas, z.B. Helium als Kühlmittel betrieben werden. Eine Verwendung in anderen Bereichen der Technik ist jedoch ohne weiteres möglich.

Werden für das Absperren von Rohrleitungen der genannten Grössenordnung massstäblich vergrösserte Ventile herkömmlicher Bauart verwendet, treten eine Reihe von Problemen auf. Zu ihrer Betätigung sind immer schwerere und komplizertere Antriebsmechanismen erforderlich. Gehäuse, Lager Ventilkörper usw. erhalten jeweils unterschiedliche Wandstärken, die in Verbindung mit einem unsymmetrischen Aufbau zu einer hohen Empfindlichkeit der Ventile gegen schnelle Temperaturänderungen führen. Diese Gefahr vergrössert sich noch, wenn es sich bei dem in der Rohrleitung enthaltenen Fördermedium um ein solches mit besonders guten Wärmeübertragungseigenschaften handelt, wie es z.B. das oben erwähnte Natrium ist.

Hydraulisch oder pneumatisch betätigte Ventile sind bekannt, die einen Druckraum aufweisen, dessen Wandung teilweise durch einen Faltenbalg gebildet wird (z.B. aus der DE-A-2 553 163); der Ventilteller oder -kegel wird durch die Ausdehnung bzw. das Zusammenziehen des Faltenbalges gesteuert. Diese Art Ventilbetätigung ist besonders vorteilhaft, da sich die Zuleitungen für das den Druck vermittelnde Arbeitsmedium fast beliebig lang und ohne bestimmte räumliche Ausrichtung auf das Ventil anordnen lassen sowie ein fluiddichtes Durchdringen von Rohrwänden usw. gestattet. Die bekannten Ventilkonstruktionen lassen sich jedoch nicht zur Lösung der weiter unten gestellten Aufgabe verwenden, da ihr unsymmetrischer Aufbau bei grossen Dimensionen keine Gewähr für eine ausreichende Festigkeit bei schnellen Temperaturänderungen bietet, mit denen in Kernreaktoren insbesondere bei Störfällen gerechnet werden muss.

Eine rotationssymmetrische Form des Ventilkörpers, vorzugsweise ein Zylinder mit angesetztem Kegel (-stumpf) ist einfach zu fertigen und wirft keine besonderen Spannungsprobleme auf. Seine Anordnung innerhalb der abzusperrenden Rohrleitung gewährleistet ein Höchstmass an Platzersparnis und eine im wesentlichen auch rotationssymmetrische Form derselben im Bereich des Ventils, wodurch auch hier das Entstehen gefährlicher Spannungsspitzen vermieden werden kann; der Druckverlust in der Rohrleitung bleibt ebenfalls niedrig. Die Anzahl der bewegten Teile ist gering. Die Abdichtung des Ventils beschränkt sich auf das dichte Durchführen der zur Betätigung des Ventils dienenden Arbeitsmittelleitung durch die Wand der Rohrleitung. Ein etwaiges Undichtwerden würde, wenn überhaupt, am ehesten im Bereich des Faltenbalges zu vermuten sein; der dadurch ermöglichte Übertritt des Arbeitsfluids in das geförderte Fluid oder umgekehrt braucht aber noch zu keinen Sicherheitsproblemen zu führen, wenn die beiden Fluide miteinander verträglich sind; im Falle der als Beispiel angeführten natriumgekühlten Kernenergieanlage könnte z.B. als Arbeitsfluid ein Natrium-Kalium-Eutektikum verwendet werden. Ein Lecken nach aussen ist damit noch nicht gegeben, da das Arbeitsfluid selbst auch in einem dichten System sich befindet. Die ebenfalls gegebene Möglichkeit, den Druck des Arbeitsmediums wahlweise von aussen oder von innen auf den Faltenbalg wirken zu lassen, erlaubt eine besondere Freiheit bei der konstruktiven Ausgestaltung des Ventils und, wie weiter unten ausgeführt, die Ausgestaltung des Ventils auch für koaxiale Rohrleitungen. Ein Ventil der beschriebenen Art ist aus der DE-A-2 730 520 bekannt. Die zur Erzielung des erforderlichen Anpressdrucks erforderliche Grösse des Faltenbalges bedingt hier jedoch das Vorhandensein einer grösseren Menge des Arbeitsfluids im Ventilkörper. Eine rasche Anpassung des Ventilkörpers an Temperaturänderungen des Förderfluids wird dadurch behindert. Eine doppelwirkende Ausführung des Ventils wird hier ebenfalls angegeben, ebenso wie die Verwendung einer Rückholfelder und die Beschichtung der Dichtflächen mit elastischen Materialien.

Aus der DE-A-2 401 970 ist ein von einem hydraulischen Stellmotor betätigbares Ventil bekannt, bei dem der Hubkörper des Stellmotors über Faltenbälge geführt ist, die einen Druckmittelraum relativ kleinen Ringquerschnitts begrenzen, um eine rasche Bewegung des Ventils zu gewährleisten. Zur Hubanzeige des Ventils ist unter anderem eine Induktionsspule vorgesehen. Der Gesamtaufbau dieses Ventils ist verhältnismässig kompliziert.

Aufgabe der vorliegenden Erfindung ist es, ein Ventil zu schaffen, das auch in Rohrleitungen grossen Durchmessers und für Fluide guter Wärmeleitfähigkeit verwendet werden kann, die grösseren Temperaturänderungen ausgesetzt sein können. Das Ventil soll leicht und sicher bedienbar sein und von geringen Abmessungen und niedrigem Gewicht sowie eine fertigungsmässig einfache Form aufweisen. Auf die Verwendung von Gestängen usw. soll verzichtet werden können.

Die Lösung der Aufgabe geschieht durch die im kennzeichnenden Teil des Anspruchs 1 angegebenen Merkmale.

Die Erfindung gestattet es, die Temperatur des den Ventilkörper füllenden Arbeitsmediums rasch zu ändern und so den Temperaturänderungen des Förderfluids folgen zu lassen. Thermisch bedingte Spannungen werden so niedrig gehalten.

Die im Anspruch 2 vorgeschlagene Ausgestaltung des Erfindungsgedankens dient dazu, die axiale Führung des Faltenbalges (der bei Ausfall der Druckmittelsteuerung selbsttätig in eine bestimmte Stellung zurückkehren soll, z.B. die «Offen»-Stellung) und damit die Zentrizität des Ventilkörpers zu verbessern. U.U. kann dann auf eine axiale Führung des Ventilkörpers in der Nähe seines freien Endes verzichtet werden.

Zur Erzielung eines gewünschten Ventilhubes muss der Faltenbalg eine bestimmte Baulänge haben, die die Länge des Ventils selbst massgeblich bestimmt.

Die im Anspruch 3 vorgeschlagene Massnahme gestattet eine Reduzierung der Baulänge bei nur unwesentlich vergrössertem Durchmesser des Ventils.

Zwei an einer gemeinsamen Basis befestigte Ventilkörper zu verwenden, bietet eine einfache Möglichkeit, ein doppeltwirkendes (also beispielsweise bei Strömungsumkehr in der Rohrleitung unverändert funktionsfähiges Ventil) zu schaffen. Eine Ausgestaltung dieses Erfindungsgedankens ist im Anspruch 4 angesprochen, durch die die beiden Hälften des doppeltwirkenden Ventils unabhängig voneinander zu betätigen sind, was z.B. bei Reparaturarbeiten an einer der Hälften nützlich sein kann.

Durch entsprechende Wahl des Werkstoffes für den Ventilkörper oder den Verdrängungskörper können in einer Führung des Ventilkörpers angebrachte, stromdurchflossene Spulen beeinflusst werden. Die dadurch induzierte Spannung kann, wie in Anspruch 5 vorgeschlagen, dazu verwendet werden, eine einfache, sichere und verschliessfrei arbeitende Positionsanzeige für das Ventil herzustellen.

Bei koaxialen Leitungen bereitet das getrennte Absperren beider Rohrleitungen bei den herkömmlichen Ventilkonstruktionen grosse Schwierigkeiten, die meist nur durch eine Trennung der beiden Rohrleitungen im Ventilbereich behoben werden können. Der Anspruch 6 schlägt ein Doppelventil für eine solche Koaxialleitung vor, bei dem von der Möglichkeit Gebrauch gemacht wird, den einen Ventilkörper nach der einen der oben angegebenen Möglichkeiten auszuformen, d.h. ihn von innen mit dem Arbeitsfluid zu beaufschlagen und dieses demgegenüber auf den zweiten Ventilkörper von aussen wirken zu lassen.

Ausführungsbeispiele der Erfindung sind in der Zeichnung dargestellt, und zwar zeigt

Fig. 1 eine erste Ausführungsform einschliesslich der zu ihrer Betätigung erforderlichen Druckmittelsteuerung,

Fig. 2 eine zweite Ausführungsform mit verringerter Baulänge,

Fig. 3 ein weiteres, doppelt wirkendes Ausführungsbeispiel,

Fig. 4 eine weitere Ausgestaltung zur Absperrung von Koaxialrohrleitungen,

Fig. 5 mit vergrössertem Massstab eine Einzelheit der Fig. 1 und

Fig. 6 eine Kombination der Ausführungen nach den Figuren 3 und 4.

Das erfindungsgemässe Ventil ist in eine Rohrleitung 11 von beispielsweise 1000 mm Durchmesser eingebaut, durch die ein Förderfluid, z.B. flüssiges Natrium, strömt (durch Pfeile angedeutet). Eine Ausbuchtung der Rohrleitung 11 bildet das Ventilgehäuse 12. In diesem ist ein rotationssymmetrischer Ventilkörper 13 angeordnet, der aus zwei etwa kegelförmigen Endteilen 131, 132, besteht, die an ihren offenen Enden mit den Enden eines Faltenbalges 133 dicht verbunden sind. Zum Schutz des Faltenbalges 133 können einander überlappende, ihn aussen umgebende Schürzen 134 angeordnet sein. Der Kegel 132 ist über mehrere radiale, in Strömungsrichtung nur einen geringen Querschnitt aufweisende Stützen 135 fest mit der Rohrleitung 11 und/oder dem Gehäuse 12 verbunden, während der Kegel 131 mit einer Spindel 136 in einer Führung 137 gleitet (das Spiel zwischen beiden Teilen ist hier übertrieben gross dargestellt). Im Inneren des Ventilkörpers 13 ist ein ebenfalls rotationssymmetrisch ausgebildeter Verdrängungskörper 14 angeordnet. Im Zwischenraum zwischen Ventilkörper 13 und Verdrängungskörper 14 mündet eine Zuleitung 161 einer Druckmittelsteuerung 16. Diese enthält ein mit dem Fördermedium kompatibles Arbeitsmedium, z.B. eine Natrium-Kalium-Legierung oder aber ebenfalls Natrium oder Gas und besteht neben der Zuleitung 161 aus einer Ableitung 162, die durch ein Regelventil 164 absperrbar ist. Ferner sind ein Speicherbehälter 165 und eine Pumpe 166 (für Flüssigmetall z.B. eine elektromagnetische Pumpe) vorhanden sowie ein nicht näher beschriebener Geber 167, der in Abhängigkeit von äusseren Faktoren die Pumpe 166 und das Regelventil 164 steuert und eine Einrichtung 168, mit der die Temperatur des Arbeitsfluids in Abhängigkeit von derjenigen des Förderfluids durch Beheizen und/oder Kühlen rasch verändert werden kann. Der Speicherbehälter kann über Leitungen 169 aus einer hier nicht gezeigten Quelle unter Druck gesetzt werden, so dass das Arbeitsfluid stets (auch ohne Zuhilfenahme der Pumpe 166) in gespanntem Zustand zur Verfügung steht. Die Stellung des Hauptventils wird durch eine Einheit 17 angezeigt, die die in Spulen 171 dadurch induzierten Spannungen auswertet, dass die ganz oder teilweise aus magnetischem Material bestehende Spindel 136 ihre Lage in bezug auf das Feld der Spulen ändert. Das in der offenen Stellung gezeichnete Ventil wird z.B. dadurch geschlossen, dass die Pumpe 166 bei geschlossener Ableitung 162 Arbeitsmedium über die Zuleitung 161 in den Ventilkörper 13 pumpt. Dieser dehnt sich in axialer Richtung aus, was durch die Nachgiebigkeit des Faltenbalges 133 ermöglicht wird, so dass die eigentlichen Dichtflächen 128 (am Gehäuse 12) und 138 (am Ventilkörper 13) in Kontakt kommen.

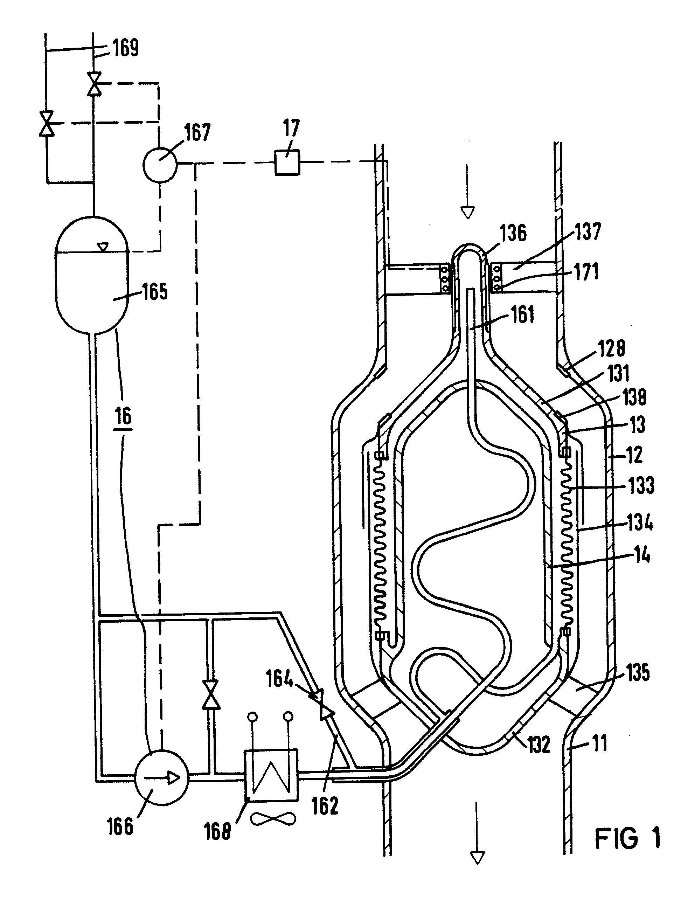

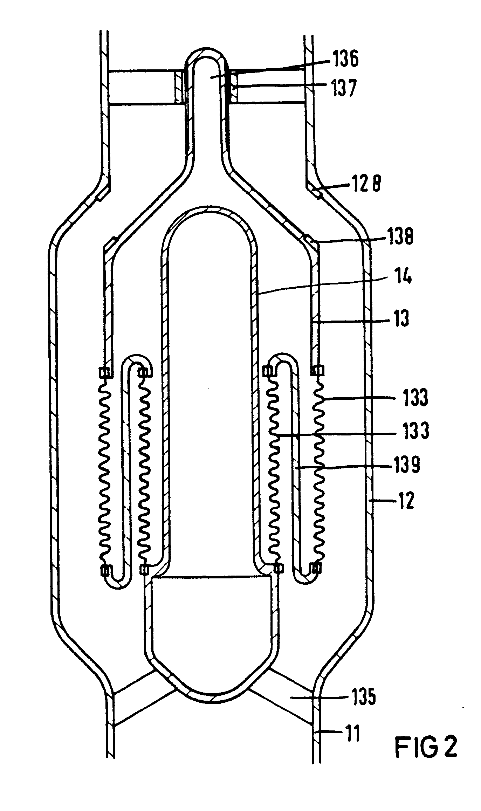

Bei der in Fig. 2 dargestellten Ausführungsform ist die Baulänge des Ventils dadurch verringert, dass der Faltenbalg 133 der Fig. 1 in zwei koaxial zueinander angeordnete Stücke unterschiedlichen Durchmessers aufgeteilt ist. Die beiden Faltenbälge werden an ihren jeweils freien Enden durch ein Zwischenstück 139 miteinander verbunden, der Durchmesser des Ventilgehäuses 12 braucht, wenn überhaupt, nur wenig vergrössert zu werden.

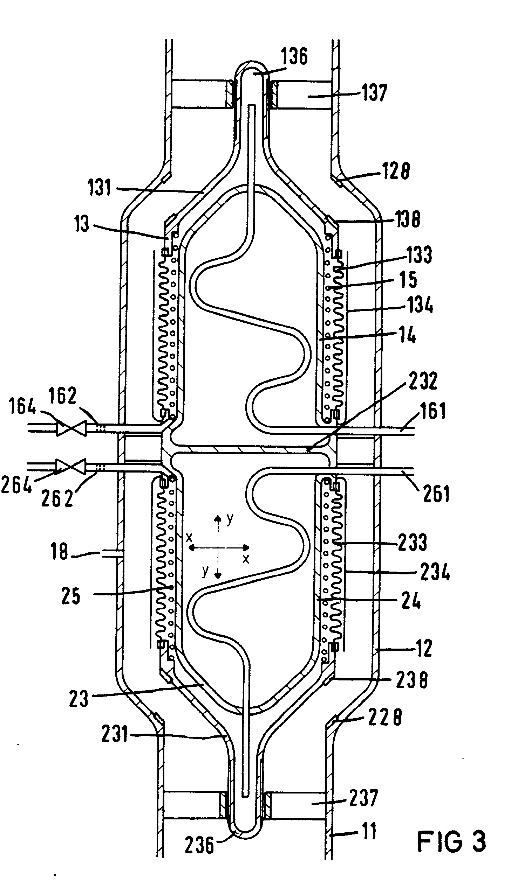

In der Fig. 3 ist ein Doppelventil dargestellt, bei dem in einem gemeinsamen Gehäuse 12 zwei Ventilkörper 13, 23 der beschriebenen Art entgegengesetzt gerichtet angeordnet sind. Der zweite Ventilkörper 23 weist ebenfalls ein kegeliges Teil 231 auf, das an einem Faltenbalg 233 befestigt ist. Beide Faltenbälge 133, 233 sind an einer gemeinsamen, in bezug auf das Gehäuse 12 festen Trennwand 232 befestigt. Eine Spindel 236 des zweiten Ventilkörpers 23 gleitet in einer weiteren Führung 237, und er ist mit einer Dichtfläche 238 versehen, die gegen die entsprechende Gegenfläche 228 am Gehäuse 12 zu liegen kommt, wenn der Innenraum des zweiten Ventilkörpers über eine Zuleitung 261 mit Druck beaufschlagt wird. Eine durch ein Ventil 264 absperrbare Ableitung 262 für das Arbeitsmedium ist ebenfalls vorhanden. Die Ausdehnung der Ventilkörper 13 bzw. 23 und damit das Schliessen des Ventils erfolgt entgegen der Kraft von Federn 15 bzw. 25, die im Beispiel einerseits an der gemeinsamen Trennwand 232 und andererseits an den kegeligen Enden 131 bzw. 231 befestigt sind. Auf die Führungen 136/137 bzw. 236/237 kann verzichtet werden, wenn die Federn 15 bzw. 25 in der x-x-Richtung eine wesentlich höhere Steifigkeit aufweisen, als in der y-y-Richtung. Eine auch bei den anderen Ausführungsformen mögliche Abzugsöffnung für Leckagen ist mit 18 bezeichnet (im Betrieb geschlossen).

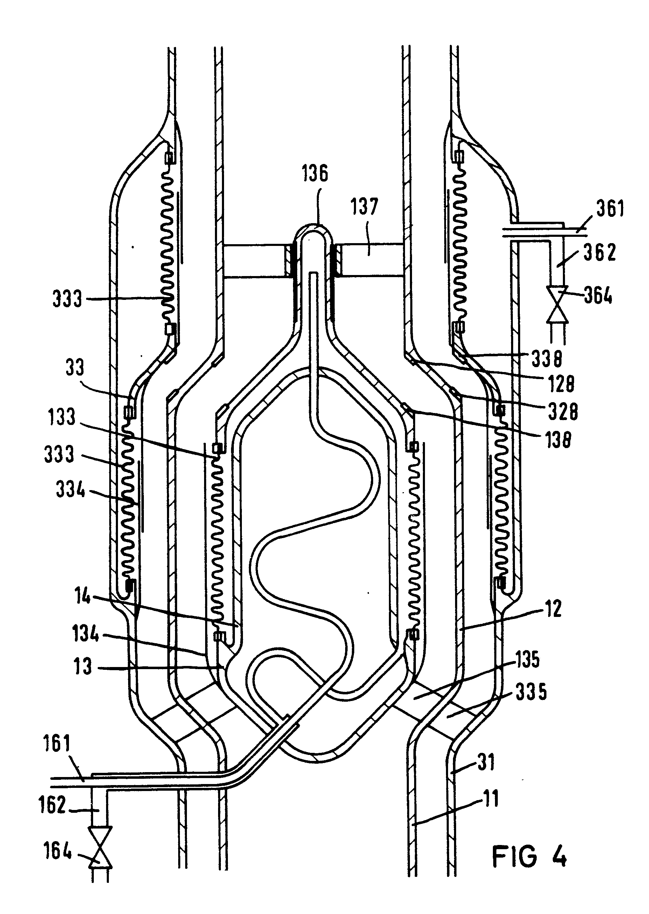

Die Fig. 4 zeigt die Anordnung eines erfindungsgemässen Doppelventils für zwei koaxiale Rohrleitungen 11 bzw. 31. Der dem Ventilkörper 13 in der inneren Rohrleitung 11 entsprechende Ventilkörper 33 im Ringraum zwischen dieser und dem äusseren Ventilgehäuse 32 weist zwar eine etwas andere Form auf, ist jedoch von der Funktion her gleichartig. Er besitzt hier zwei Faltenbälge 333 und eine Dichtfläche 338, die mit einer entsprechenden starren Dichtfläche 328 zusammenwirkt, die an der Aussenseite des inneren Ventilgehäuses 12 angebracht ist. Der Abstand zwischen den beiden Ventilgehäusen 12 und 32 wird durch Stützen 335 aufrechterhalten. Die Zufuhr des Arbeitsmittels in den Ventilkörper 13 erfolgt auf die oben beschriebene Weise, wobei die Durchführung der Zuleitung 161 und Ableitung 162 durch die Wandungen der Rohre 11 und 31 keine besonderen Schwierigkeiten macht. Der Ventilkörper 33 wird durch eine zweite Druckmittelsteuerung 36 (hier nicht gezeichnet) beaufschlagt, die der Druckmittelsteuerung 16 gleichen kann. Die Zuleitung 361 für das Arbeitsmedium endet hier auf der Aussenseite des Ventilkörpers 33, ebenso wie die durch ein Regelventil 364 absperrbare Ableitung 362; die Wirkungsweise des Ventilkörpers wird durch die Beaufschlagung von der Aussenseite her nicht geändert.

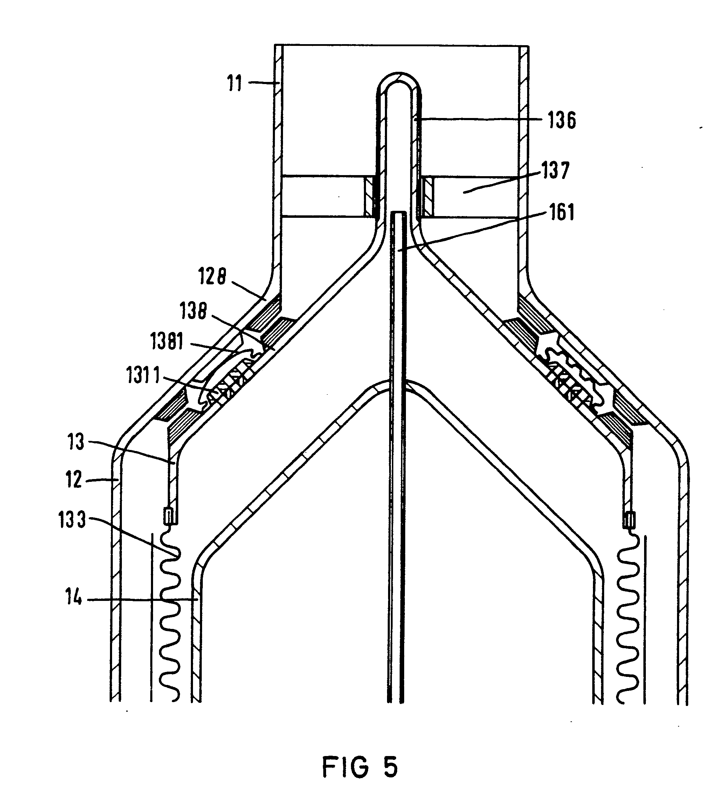

Die Fig. 5 zeigt die Möglichkeit, kleine Ungenauigkeiten zwischen den Dichtflächen 128 und 138 dadurch auszugleichen, dass ein Teil der Dichtflächen elastisch verformbar ausgestaltet ist; zum Beispiel durch eine Membran 1381. Ihre Anpresskraft wird dadurch unterstützt, das im Bereich hinter ihr das kegelige Ende 131 des Ventilkörpers 13 mit Bohrungen 1311 versehen ist, durch die sich der im Inneren des Ventilkörpers 13 herrschende Druck des Arbeitsfluids der Membrane mitteilen kann.

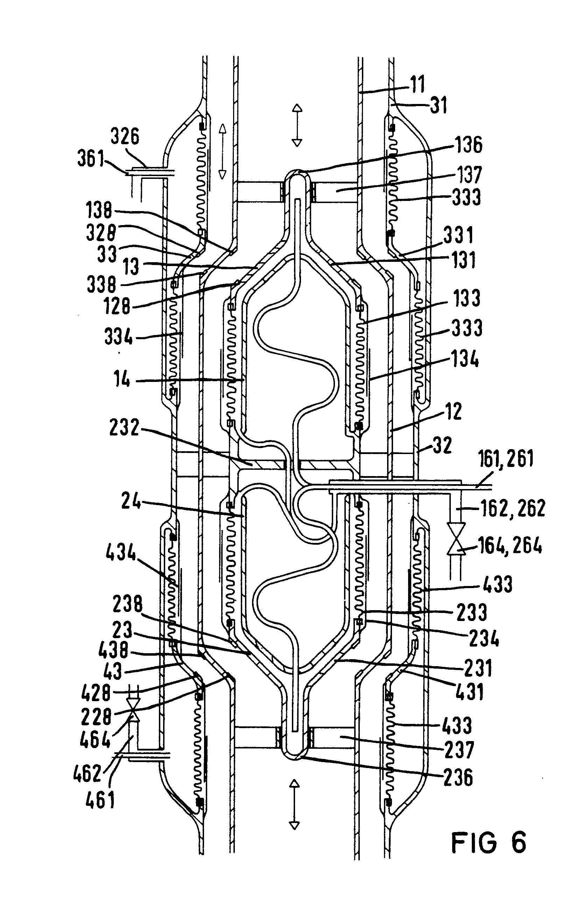

Die Fig. 6 schliesslich stellt ein Doppelventil für eine Koaxialleitung dar, das aus einer Zusammenfassung der oben dargestellten Möglichkeiten besteht. Die neu eingeführten Teile 43, 431, 434, 438, 461, 464, 428 entsprechen den oben bereits beschriebenen Teilen 33, 328, 331, 333, 334, 338, 361, 362 und 364.

## Patentansprüche

1. Ventil mit einem durch Druck eines Arbeitsfluids in axialer Richtung ausdehnbaren, an den Ventilsitz (128, 228) anpressbaren, rotationssymmetrischen Ventilkörper (13, 23), der aus mindestens einem an seinem einen Ende am Ventilgehäuse (12) befestigten Faltenbalg (133, 233) besteht, der an seinem anderen Ende einen axial verschiebbaren Ventilkegel (131, 231) trägt, dadurch gekennzeichnet, dass im Inneren des Ventilkörpers (13, 23) ein den grössten Teil von dessen Innenraum ausfüllenden, einen Zwischenraum zu diesem belassender Verdrängungskörper (14, 24) angeordnet ist, wobei der Zwischenraum mit Mitteln zum schnellen Austausch (166) und/oder zur schnellen Temperaturänderung (168) des Arbeitsfluids verbindbar ist.

2. Ventil nach Anspruch 1 mit einem entgegen der Kraft einer Rückholfeder (15, 25) ausdehnbaren Ventilkörper (13, 23) dadurch gekennzeichnet, dass die Steifigkeit der Rückholfeder (15, 25) quer zu ihrer Längsachse um ein Mehrfaches grösser ist als in Längsrichtung.

3. Ventil nach Anspruch 1 oder 2, dadurch gekennzeichnet, dass der Faltenbalg (133) in zwei koaxial ineinander angeordnete Stücke geteilt ist, die an entgegengesetzten Enden durch ein Zwischenstück (139) miteinander verbunden sind.

4. Doppeltwirkendes Ventil nach Anspruch 1, 2 oder 3, mit zwei Ventilkörpern (13, 23) mit entgegengegsetzt zueinander gerichteten Ventilkegeln (131, 231) dadurch gekennzeichnet, dass die zwei Ventilkörper (13, 23) unabhängig voneinander in axialer Richtung ausdehnbar sind.

5. Ventil nach einem oder mehreren der vorhergehenden Ansprüche mit einem Ventilkörper (13) mit in Axialrichtung unstetigen magnetischen Eigenschaften, dadurch gekennzeichnet, dass in einer Führung (137) des Ventilkörpers (13) Spulen (171) angebracht sind, in denen durch Axialverschiebung des Ventilkörpers eine Spannung induzierbar ist.

6. Ventil nach einem oder mehreren der vorhergehenden Ansprüche für eine Koaxialrohrleitung, dadurch gekennzeichnet, dass der Ventilkörper (13, 23) im Inneren der inneren Rohrleitung (11) auf seiner Innenseite, und ein weiterer Ventilkörper (33, 43) im Ringraum zwischen innerer (11) und äusserer (31) Rohrleitung auf seiner Aussenseite mit dem Arbeitsfluid beaufschlagbar ist.

## Revendications

1. Vanne comportant un corps de vanne (13, 23) de révolution, qui est susceptible de s'allonger suivant la direction axiale sous la pression d'un fluide de fonctionnement, qui peut être appliqué contre le siège de vanne (128, 228), qui est constitué d'au moins un soufflet (133, 233) fixé par l'une de ses extrémités à la cage de la vanne (12) et qui porte à son extrémité un cône de vanne (131, 231) susceptible de coulisser axialement, caractérisée en ce qu'à l'intérieur du corps de vanne (13, 23) est disposé un corps de refoulement (14, 24) remplissant la plus grande partie de son espace intérieur et laissant subsister dans celui-ci un espace intermédiaire, ce dernier étant susceptible d'être relié avec des moyens pour le remplacement rapide (166) et/ou la modification rapide de la température (168) du fluide de fonctionnement.

2. Vanne suivant la revendication 1, comprenant un corps de vanne (13, 23) susceptible de s'allonger à l'encontre de la force d'un ressort de rappel (13, 23), caractérisée en ce que la rigidité du ressort de rappel (15, 25) est plus grande, de plusieurs fois, transversalement à son axe longitudinal que suivant la direction longitudinale.

3. Vanne suivant la revendication 1 ou 2, caractérisée en ce que le soufflet (133) est subdivisé en deux pièces s'emboîtant coaxialement l'une dans l'autre et reliées entre elles à leurs extrémités opposées par une pièce intermédiaire (139).

4. Vanne à double effet suivant la revendication 1, 2 ou 3, ayant deux corps de vanne (13, 23) à cônes de vanne (131, 231) dirigés en sens opposé l'un par rapport à l'autre, caractérisée en ce que les deux corps de vanne (13, 23) sont susceptibles de s'allonger indépendamment l'un de l'autre suivant la direction axiale.

5. Vanne suivant l'une ou plusieurs des revendications précédentes, comprenant un corps de vanne (13) à propriétés magnétiques variables suivant la direction axiale, caractérisée en ce que, dans une pièce de guidage (137) du corps de vanne (13), sont fixées des bobines (171) dans lesquelles une tension peut être induite par le déplacement axial du corps de soupape.

6. Vanne suivant l'une ou plusieurs des revendications précédentes pour une canalisation coaxiale, caractérisée en ce que le fluide de fonctionnement peut charger la partie intérieure du corps de vanne (13, 23) à l'intérieur de la canalisation intérieure (11) et la partie extérieure d'un autre corps de vanne (33, 43) dans l'intervalle annulaire compris entre les canalisations intérieure (11) et extérieure (12).

**Claims**

1. A valve having a rotationally symmetrical valve body (13, 23) which is extendable in the axial direction by the pressure of a working fluid, can be pressed against the valve seat (128, 228), and which comprises at least one folded bellows (133, 233) which is secured to the valve housing (12) at one end and which, at its other end, carries an axially displaceable valve cone (131, 231) characterised in that within the valve body (13, 23), there is arranged a displacement body (14, 24) which fills the greater part of the inner space thereof and leaves an interspace therewith, which interspace is connectable to means for the rapid exchange (166) and/or for the rapid temperature change (168) of the working fluid.

2. A valve according to claim 1 having a valve body which is extendable against the force of a return spring (15, 25), characterised in that transversely to its longitudinal axis, the rigidity of the return spring (15, 25) is multiply greater than in the longitudinal direction.

3. A valve according to claim 1 or claim 2, characterised in that the bellows (133) is divided into two pieces coaxially arranged one in the other and opposite ends of which pieces are connected by an intermediate piece (139).

4. A double-acting valve according to claim 1, 2 or 3, having two valve bodies (13, 23) with valve cones (131, 231) which are mutually oppositely directed, characterised in that the two valve bodies (13, 23) can be extended in the axial direction independently of one another.

5. A valve according to one or more of the preceding claims having a valve body (13) with variable magnetic characteristics in the axial direction, characterised in that coils (171) in which tension can be induced by axial displacement of the valve body, are fixed in a guide (137) for the valve body (13).

6. A valve according to one or more of the preceding claims for a coaxial pipeline, characterised in that the valve body (13, 23) within the inner pipeline (11), can be supplied with the working fluid on its inner side and a further valve body (33, 43) in the annulus between the inner (11) and the outer pipeline (31) can be supplied with the working fluid on its outer side.

FIG 1

FIG 2

FIG 3

FIG 4

FIG 5

FIG 6